# EUROPÄISCHE PATENTSCHRIFT

(11) **EP 0 436 986 B1**
(45) Veröffentlichungstag und Bekanntmachung des Hinweises auf die Patenterteilung: **20.05.1998**
(21) Anmeldenummer: 90203400.8
(22) Anmeldetag: 18.12.1990
(51) Int. Cl.: G01N 23/20

(54) **Anordnung zur Untersuchung eines Prüfobjekts mit Gamma- oder Röntgenstrahlung**
Apparatus for examining a test object with gamma- or X-ray radiation
Appareil d'examen d'un objet d'essai avec un rayonnement gamma ou X

(30) Priorität: 10.01.1990 DE 4000507
(43) Veröffentlichungstag der Anmeldung: 17.07.1991
(73) Patentinhaber: Philips Patentverwaltung GmbH, 22335 Hamburg (DE); Philips Electronics N.V., 5621 BA Eindhoven (NL)
(72) Erfinder: Kosanetzky, Josef, Dr., W-2000 Norderstedt (DE); Fischer, Karl-Heinz, W-2000 Hamburg 61 (DE)
(74) Vertreter: Hartmann, Heinrich, Dipl.-Ing.

(56) Entgegenhaltungen:
- EP-A- 0 184 247
- DE-A- 2 713 581
- IEEE TRANSACTIONS ON NUCLEAR SCIENCE Bd. NS29, Nr. 3, Juni 1982, NEW YORK,USA Seiten 1260 - 1265; G.HARDING: 'ON THE SENSITIVITY AND APPLICATION POSSIBILITIES OF A NOVEL COMPTON SCATTER IMAGING SYSTEM'
- NUCLEAR INSTRUMENTS AND METHODS IN PHYSICS RESEARCH Bd. A280, Nr. 2/3, 10. August 1989, Amsterdam NL Seiten 517 - 528; G. Harding et al.: 'SCATTERING X-RAY BEAM NONDESTRUCTIVE TESTING'

## Beschreibung

Die Erfindung bezieht sich auf eine Anordnung zur Untersuchung eines Prüfobjekts mit Gamma- oder Röntgenstrahlung, mit einer primären Röntgenstrahlenquelle zur Erzeugung mindestens eines auf das Prüfobjekt gerichteten primären Röntgen-Nadelstrahlenbündels, und mit mindestens einer, zwischen dem Prüfobjekt und einem Detektor angeordneten Schlitzblende, durch welche von der primären Röntgenstrahlung im Prüfobjekt gebildete sekundäre Röntgenstrahlung (Compton-Effekt) auf mindestens einen Detektor gerichtet ist.

Derartige durch die EP-A 184 247 bekannte Anordnungen werden für die zerstörungsfreie Prüfung hochwertiger, beispielsweise für die Raumfahrttechnik benötigter Bauteile verwendet.

Die Intensität des in das Material des Prüfobjekts eindringenden primären Röntgen- Nadelstrahlenbündels wird durch Absorption und Streuung geändert. Mit steigender primärer Strahlungsenergie wird die Comptonstreuung dominierend, welche sich von jedem Materiepunkt auf dem Weg der primären Strahlung nahezu kugelförmig ausbreitet. Die Intensität der Compton-Strahlung ist folglich in allen Winkelrichtungen nahezu gleich. Besonders vorteilhaft können Werkstoffe wie Leichtmetall, Kunststoff, Laminate oder Keramik untersucht werden.

Besonders einfache Untersuchungsanordnungen ergeben sich, wenn durch geeignete Detektoren die relativ zur primären Strahlungsrichtung zurückgestreuten Anteile der sekundären Strahlung detektiert werden. Die Detektoren befinden sich dann auf derselben Seite des Prüfobjekts wie die primäre Röntgenstrahlenquelle.

Die Schlitzblende wirkt ähnlich wie die Öffnung einer Lochkamera. Durch ihre Raumlage relativ zum Detektor ist vorgegeben, von welchem auf dem primären Röntgenstrahl liegenden Punkten des Prüfobjekts gestreute Strahlung auf den Detektor gelangt. Durch Verschiebung des Prüfobjekts relativ zur Untersuchungsanordnung bzw. umgekehrt läßt sich ein dreidimensionaler Bereich des Prüfobjekts untersuchen.

In einem gewissen Tiefenbereich in Richtung des primären Röntgenstrahls aufeinanderfolgende Punkte des Prüfobjekts lassen sich ohne Verschiebung des Prüfobjekts oder der Untersuchungsanordnung bei Verwendung einer Gruppe von mehreren Detektoren abtasten. Weiterhin kann der primäre Röntgenstrahl mittels einer geeigneten Ablenkanordnung, beispielsweise gemäß der EP-A 184 247, senkrecht zur Strahlrichtung verschoben werden, so daß damit ohne aufwendige Verschiebungen der Untersuchungsanordnung Flächenbereiche des Prüfobjekts abtastbar sind.

Bei vorgegebener räumlicher Zuordnung des Prüfobjekts zur Untersuchungsanordnung ist der meßbare Tiefenbereich durch die geometrische Zuordnung der Lage der Schlitzblende und der Detektoren vorgegeben.

Eine weitere Anordnung ist aus Nuclear Instruments and Methods in Physics Research, Bd. A280, Nr. 2/3, 10. August 1989, Amsterdam, NL, Seiten 517-528; G. Harding et al.: "Scattering X-Ray Beam Nondistructive Testing" bekannt.

Der Erfindung liegt die Aufgabe zugrunde, die obengenannte Anordnung derart zu gestalten, daß der von den Detektoren erfaßbare Tiefenbereich sowie die Auflösung des Prüfobjekts ohne Veränderungen der Lage des Prüfobjekts oder des Untersuchungsgeräts veränderbar sind.

Die Lösung gelingt dadurch, daß die Lage der Schlitzblende relativ zum Detektor mittels einer Verstelleinrichtung gemäß dem kennzeichnenden Teil des Anspruchs 1 verschiebbar ist.

Erfindungsgemäß braucht nur ein kleines, die Schlitzblenden oder die Detektoren enthaltendes Bauteil der Untersuchungsanordnung verstellt zu werden. Das kann einfach und mit hoher Positioniergenauigkeit erreicht werden. Besonders einfach ist die Lage der Schlitzblende zu verändern.

Durch die Relativlage der Schlitzblende ist vorgegeben, von welcher Tiefe des Prüfobjekts sekundäre Strahlung von einem Detektor erfaßt wird. Bei einer Gruppe von mehreren Detektoren kann durch die Lage der Schlitzblende auch der Abstand der von den Detektoren erfaßten Punkte beeinflußt werden. Wenn nur die Auflösung durch eine Gruppe von Detektoren, also der Abstand der einzelnen zugehörigen Meßpunkte, verändert werden soll, ist die Schlitzblende vorteilhaft in einer Koordinatenrichtung zu verschieben, welche der Mittelachse der durch die Blende dringenden sekundären Strahlung entspricht. Wenn man dagegen bei unverändertem Abstand der Einzelpunkte diese insgesamt in Richtung der primären Strahlung verschieben will, muß vorteilhaft die Koordinatenrichtung der Verschiebung geneigt zur Mittelachse der gestreuten Strahlung verlaufen. Dabei genügt es im allgemeinen, daß in konstruktiv einfach zu realisierender Weise die Koordinatenrichtung parellel zur Mittelachse der sekundären Röntgenstrahlung verläuft. Bei dieser einfachen Lösung wird der Abstand der einzelnen detektierten Punkte nur unwesentlich verändert.

Wenn man sowohl die Tiefenlage der detektierten Punkte als auch deren Abstand variieren will, müssen die Schlitzblenden bzw. der Detektor in zwei Koordinatenrichtungen verschiebbar sein.

Ein einfach handhabbares Untersuchungsgerät ergibt sich dadurch, daß die Schlitzblende bzw. der Detektor mittels eines Manipulators in mindestens einer Koordinatenrichtung verschiebbar ist. Bei einer bevorzugten Lösung ist vorgesehen, daß der Manipulator elektromotorisch betätigbar ist. Dann können Verstellvorgänge an beliebiger Stelle von einem Bedienpult aus veranlaßt werden.

Wenn die Elektromotoren des Manipulators über programmierbare Steuerschaltungen betreibbar sind, können in einem bestimmten Flächenbereich gelegene Meßpunkte automatisch abgetastet und erfaßt werden. Die Meßwerte für die einzelnen Punkte können gespeichert und zu einem Gesamtbild ausgewertet werden.

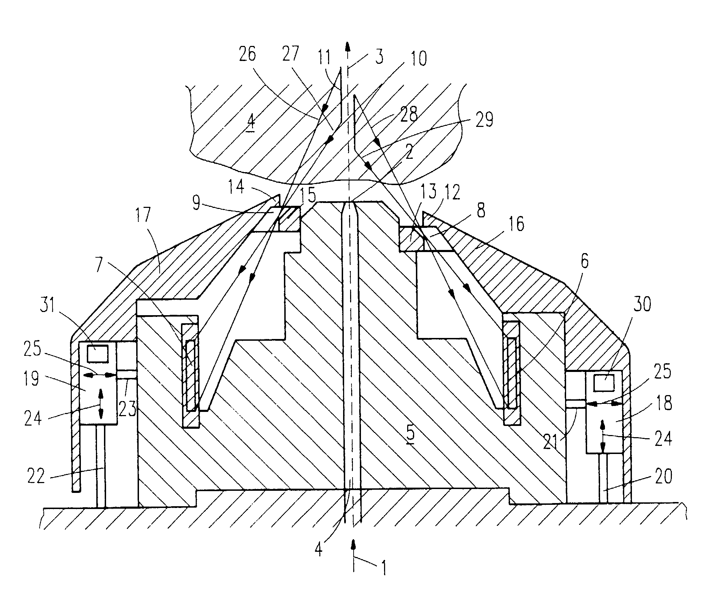

Die Erfindung wird anhand der Beschreibung eines in der Zeichnung dargestellten Ausführungsbeispiels näher erläutert.

Die Figur zeigt einen Schnitt durch den Meßkopf einer Anordnung zur zerstörungsfreien Untersuchung eines Prüfobjekts gemäß der Erfindung.

Von einer nicht dargestellten Röntgenstrahlenquelle beliebiger bekannter Art ausgehende Röntgenstrahlung 1 dringt durch den Kanal 4 des Meßkopfes 5 nach dem Verlassen des Schlitzes 2 als Nadelstrahlenbündel 3 in ein Prüfobjekt 4. In allen Materiepunkten auf seinem Weg durch das Prüfobjekt wird gestreute Röntgenstrahlung in alle Winkelrichtungen gesendet, deren Intensität von der Art der Materie abhängig ist. Von vorgegebenen Punkten werden durch die Schlitzblenden 8 und 9 sekundäre Strahlen auf im Meßkopf 5 fest angeordnete Detektorgruppen 6 und 7 durchgelassen. Jede dieser Detektorgruppen besteht aus beispielsweise 5 in Richtung des primären Strahls 3 übereinander angeordneten Einzeldetektoren, so daß damit von einer Detektorgruppe 6 bzw. 7 fünf Punkte einer Tiefenstrecke 10 bzw. einer Tiefenstrecke 11 erfaßt werden.

Die von den beiden Detektorgruppen 6 und 7 erfaßten Punkte sind im allgemeinen nicht identisch, sie folgen beispielsweise abwechselnd und versetzt aufeinander. Grundsätzlich genügt für eine erfindungsgemäße Anordnung eine einzige Detektorgruppe mit einem einzigen Detektor. Eine Mehrzahl von Detektoren ist jedoch vorteilhaft, um durch gleichzeitige Parallelmessungen die Meßzeiten zu verringern. Wegen der Vielzahl der abzutastenden Meßpunkte und wegen der zur Rauschunterdrückung erforderlichen Meßzeiten ergeben sich nämlich beträchtliche Meßdauern für die Untersuchung eines Prüfobjektes.

Die Schlitzblenden 8 und 9 sind jeweils zwischen Spaltschienen 12 und 13 bzw. 14 und 15 von Blendenkörpern 16 bzw. 17 gebildet. Diese Blendenkörper sind unabhängig voneinander durch Manipulatoren 18 bzw. 19 mittels angedeuteter Spindeln 20 und 21 bzw. 22 und 23 in Richtung der Doppelpfeile 24 bzw. 25 verstellbar.

Während sich der rechte Blendenkörper 16 einer unteren Grenzlage befindet, ist der linke Blendenkörper 17 in eine erhöhte Stellung gehoben. Deshalb definieren die sekundären, auf die Detektorgruppe 7 gelangenden Grenzstrahlen 26 und 27 eine Tiefenstrecke 11, welche höher liegt, als die Tiefenstrecke 10 zwischen den zur Detektorgruppe 6 gelangenden sekundären Grenzstrahlen 28 und 29.

Die Manipulatoren 18 und 19 werden durch nicht dargestellte Elektromotoren angetrieben, welche durch Steuerschaltungen 30 bzw. 31 gesteuert werden. Diese Steuerschaltungen können derart programmiert sein, daß nacheinander Meßpunkte in verschiedenen Tiefenlagen in automatischer Folge erfaßt werden. Die Meßdaten werden gespeichert und schließlich auf einem Display angezeigt.

Wenn eine der Vereinfachung halber nicht dargestellte Ablenkeinrichtung für den primären Strahl vorgesehen ist (vgl. EP-A 184 247), kann ein flächiger Bereich des Prüfobjekts 4 abgebildet werden. Wenn der Meßkopf zusätzlich in einer dritten Koordinatenrichtung in einem gewissen Bereich verschiebbar ist, können dreidimensionale Bereiche des Prüfobjekts 4 dargestellt werden.

Eine geeignete Veränderung des durch die Untersuchung erfaßten Tiefenbereichs ist bereits bei einer Verstellbarkeit der Schlitzblende nur in Richtung des Pfeils 24 bzw. der primären Strahlung 3 möglich. Dann ergibt sich eine besonders einfache konstruktive Ausführung des Verstellmechanismus, bei welcher die Blendenkörper 16 und 17 als konstruktive Einheit gemeinsam verschoben werden können.

## Patentansprüche

1. Anordnung zur Untersuchung eines Prüfobjekts (4) mit Gamma- oder Röntgenstrahlung, mit einer primären Röntgenstrahlenquelle zur Erzeugung mindestens eines auf das Prüfobjekt (4) gerichteten primären Röntgen-Nadelstrahlenbündels (3), und mit mindestens einer, zwischen dem Prüfobjekt (4) und einem Detektor (6, 7) angeordneten Schlitzblende (8, 9), durch welche von der primären Röntgenstrahlung (3) im Prüfobjekt (4) gebildete gestreute (sekundäre) Röntgenstrahlung (26, 27, 28, 29) (Compton-Effekt) auf mindestens einen Detektor (6, 7) gerichtet ist,
dadurch gekennzeichnet, daß die Anordnung eine Verstelleinrichtung (18, 19) aufweist zur Veränderung der Lage der Schlitzblende (8, 9) relativ zum Detektor (6, 7), daß zur Veränderung des Tiefenbereichs die Schlitzblende (8, 9) oder der Detektor (6, 7) in einer zur Mittelachse der sekundären Röntgenstrahlung (26 bis 29) geneigt verlaufenden Koordinatenrichtung verschiebbar ist und daß zur Veränderung der Auflösung die Schlitzblende (8, 9) oder der Detektor (6, 7) in einer der Mittelachse der sekundären Röntgenstrahlung (26 bis 29) entsprechenden Koordinatenrichtung verschiebbar ist.

2. Anordnung nach Anspruch 1,
dadurch gekennzeichnet, daß die Lage der Schlitzblende (8,9) veränderbar ist.

3. Anordnung nach Anspruch 1,
dadurch gekennzeichnet, daß die Lage des Detektors (6,7) veränderbar ist.

4. Anordnung nach einem der Ansprüche 1 bis 3,
dadurch gekennzeichnet, daß die Schlitzblende (8,9) bzw. der Detektor (6,7) in einer einzigen Koordinatenrichtung verschiebbar ist.

5. Anordnung nach einem der Ansprüche 1 bis 3,
dadurch gekennzeichnet, daß die Schlitzblende (8,9) bzw. der Detektor (6,7) in zwei Koordinatenrichtungen verschiebbar ist.

6. Anordnung nach einem der Ansprüche 1 bis 7,
dadurch gekennzeichnet, daß die Schlitzblende (8,9) bzw. der Detektor (6,7) mittels eines Manipulators (18,19) verschiebbar ist.

7. Anordnung nach Anspruch 6,
dadurch gekennzeichnet, daß der Manipulator (18,19) elektromotorisch betätigbar ist.

8. Anordnung nach Anspruch 7,
dadurch gekennzeichnet, daß die Elektromotoren des Manipulators (18,19) über programmierbare Steuerschaltungen (30,31) betreibbar sind.

## Claims

1. A device for examining a test object (4) by means of gamma or X-rays, comprising a primary X-ray source for generating at least one primary X-ray pencil beam (3) which is directed onto the test object (4), and also comprising at least one slit diaphragm (8, 9) which is arranged between the test object (4) and a detector (6, 7) and directs scattered (secondary) X-rays (26, 27, 28, 29), produced by the primary X-rays (3) in the test object (4) (Compton effect), onto at least one detector (6, 7),
characterized in that the device comprises an adjusting device (18, 19) for changing the position of the slit diaphragm (8, 9) relative to the detector (6, 7), that, in order to change the depth range, the slit diaphragm (8, 9) or the detector (6, 7) can be displaced in a coordinate direction which is inclined with respect to the central axis of the secondary radiation (26 to 29) and that, in order to change the resolution, the slit diaphragm (8, 9) or the detector (6, 7) can be displaced in a coordinate direction which corresponds to the central axis of the secondary X-rays (26 to 29).

2. A device as claimed in Claim 1, characterized in that the position of the slit diaphragm (8, 9) can be changed.

3. A device as claimed in Claim 1, characterized in that the position of the detector (6, 7) can be changed.

4. A device as claimed in one of the Claims 1 to 3, characterized in that the slit diaphragm (8, 9) or the detector (6, 7) can be displaced in a single coordinate direction.

5. A device as claimed in one of the Claims 1 to 3, characterized in that the slit diaphragm (8, 9) or the detector (6, 7) is displaceable in two coordinate directions.

6. A device as claimed in one of the Claims 1 to 7, characterized in that the slit diaphragm (8, 9) or the detector (6, 7) can be displaced by means of a manipulator (18, 19).

7. A device as claimed in Claim 6, characterized in that the manipulator (18, 19) can be driven by means of an electric motor.

8. A device as claimed in Claim 7, characterized in that the electric motors of the manipulator (18, 19) can be controlled by way of programmable control circuits (30, 31).

## Revendications

1. Dispositif d'examen d'un objet à contrôler (4) avec un rayonnement X ou gamma avec une source primaire de rayons X en vue de la production d'au moins un faisceau primaire de rayons X en aiguille (3) dirigé sur l'objet à contrôler (4) et avec au moins un écran en fente (8, 9) disposé entre l'objet à contrôler (4) et un détecteur (6,7), par lequel le rayonnement X (26, 27, 28, 29) (secondaire) diffusé formé par le rayonnement X (3) primaire dans l'objet à contrôler (4) (effet de Compton) est dirigé sur au moins un détecteur (6, 7) caractérisé en ce que le dispositif présente un dispositif de réglage (18, 19) en vue de la modification de la position de l'écran en fente (8, 9) par rapport au détecteur (6,7), qu'en vue de la modification de la plage de profondeurs, l'écran en fente (8, 9) ou le détecteur (6, 7) peut se déplacer dans une direction de coordonnées inclinée par rapport à l'axe médian du rayonnement X secondaire (26 à 29) et qu'en vue de la modification de la résolution, l'écran en fente (8,9) ou le détecteur (6, 7) peuvent se déplacer dans une direction de coordonnées correspondant à l'axe médian du rayonnement X secondaire (26 à 29).

2. Dispositif selon la revendication 1,
caractérisé en ce que la position de l'écran en fente (8, 9) peut être modifiée.

3. Dispositif selon la revendication 1, caractérisé en ce que la position du détecteur (6, 7) peut être modifiée.

4. Dispositif selon l'une des revendications 1 à 3, caractérisé en ce que l'écran en fente (8, 9) ou le détecteur (6, 7) peuvent être déplacés dans une seule direction de coordonnées.

5. Dispositif selon l'une des revendications 1 à 3, caractérisé en ce que l'écran en fente (8, 9) ou le détecteur (6, 7) peuvent être déplacés dans deux directions de coordonnées.

6. Dispositif selon l'une des revendications 1 à 5, caractérisé en ce que l'écran en fente (8, 9) ou le détecteur (6, 7) peuvent être déplacés à l'aide d'un manipulateur (18, 19).

7. Dispositif selon la revendication 6, caractérisé en ce que le manipulateur (18, 19) peut être actionné par un moteur électrique.

8. Dispositif selon la revendication 7, caractérisé en ce que les moteurs électriques du manipulateur (18,19) peuvent être actionnés par l'intermédiaire de circuits de commande programmables (30, 31).
